# EUROPÄISCHE PATENTSCHRIFT

(11) **EP 0 505 957 B1**
(45) Veröffentlichungstag und Bekanntmachung des Hinweises auf die Patenterteilung: **17.07.1996**
(21) Anmeldenummer: 92104980.5
(22) Anmeldetag: 20.03.1992
(51) Int. Cl.: C02F 1/04

(54) **Verfahren und Vorrichtung zur Abwasserbehandlung im Rahmen einer Lackier- und Pulverbeschichtungsanlage**
Method and apparatus for waste water treatment in connection with a paint and powder coating plant
Procédé et dispositif pour le traitement des eaux usées pour des installations de peinture et de poudrage

(30) Priorität: 27.03.1991 DE 4109996
(43) Veröffentlichungstag der Anmeldung: 30.09.1992
(73) Patentinhaber: Wurster, Gerd, D-70191 Stuttgart (DE)
(72) Erfinder: Wurster, Gerd, D-70191 Stuttgart (DE)
(74) Vertreter: Witte, Alexander, Dr.-Ing.

(56) Entgegenhaltungen:
- EP-A- 0 457 930
- DD-A- 235 626
- DE-A- 2 524 094
- FR-A- 2 227 229
- GB-A- 1 210 105
- US-A- 3 973 987
- Leitfaden Umwelttechnik, Eisenmann, 5. Auflage, 1/89, S. 17, 18
- I-Lack, "Die Vorbehandlung der 90er Jahre: nasschemisch mit integriertem Umweltschutz", 4/90, S. 139-143
- Taschenbuch für Lackierbetriebe 1991, Curt R. Vincentz Verlag, S. 428-434

## Beschreibung

Die Erfindung betrifft ein Verfahren zur Behandlung von Abwässern aus einer Vorbehandlungsanlage mit einer nachgeschalteten Lackier- oder Pulverbeschichtungsanlage.

In Vorbehandlungsanlagen werden Eisen- und Nichteisenmetalle, Kunststoffe und Verbundwerkstoffe vorbehandelt zum späteren Lackieren oder Pulverbeschichten. Vorbehandlungsprozesse sind beispielsweise Reinigen, Entfetten, Phosphatieren, Passivieren, Beizen, Chromatieren in Verbindung mit Spülvorgängen. Die in der Vorbehandlungsanlage entstehenden Abwässer werden in der Regel einer Abwasserbehandlung durch Entgiften, Neutralisieren, Ausflocken, Sedimentieren, Filtern, Ultrafiltrieren, Emulsionstrennung oder dergleichen unterzogen, bevor sie in die öffentliche Kanalisation eingeleitet werden können.

Die Abwasserbehandlung des belasteten Abwassers ist aufwendig, und dennoch ergaben sich abwassertechnische Umweltbelastungen.

Aus der DE-A-2 524 094 ist ein Verfahren zur Rückgewinnung von Wertstoffen aus industriellen Spülbädern bekannt, das insbesondere für die Rückgewinnung von Elektrolyten eingesetzt wird. Hier wird das angereicherte Spülwasser verdüst und ggf. mit der Abluft des Behandlungsbades durch Verdunstung aufkonzentriert, das flüssige Konzentrat durch Abtrennung der Wertstoffe von dem Fremdstoffen gereinigt, und die Wertstoffe werden in das Behandlungsbad zurückgeführt.

Ein weiteres Verfahren, das die Aufbereitung von Abwässern aus der Galvanik betrifft, ist durch die DD-A-235 626 bekannt geworden. Hierbei wird gleichzeitig mit einer Elektrolyse eine Verdunstung zur Volumeneinengung und Aufkonzentrierung der Elektrolytelösung mittels eines Verdunstersystems durchgeführt, wobei gleichzeitig durch die Ladungsträgerbewegung im Elektrolyten der das Verdunstersystem unmittelbar umgebende Flüssigkeitsbereich des Elektrolyten erwärmt wird. Zur Behandlung von Spül- und Halbkonzentraten aus der Galvanik, die in der Regel abscheidbare oder nicht abscheidbare kationische Wertstoffe enthalten, wird die Kathode im Elektrolysebehälter und die Anode am Verdunstersystem angeordnet. Dabei reichern sich nicht abscheidbare Kationen in dem Elektrolysebehälter befindlichen Teil der Elektrolytlösung an. Sollen anionische Wertstoffe, wie etwa Chromationen rückgewonnen werden, so wird eine umgekehrte Polung der Elektroden vorgenommen. Zusätzlich wird die Wärmeenergie der Umgebungsluft zur Verbesserung der Verdunstungswirkung ausgenutzt.

Durch die US-A-3 973 987 ist ein Verfahren zur Behandlung von Abwässern aus der naßchemischen Metallbehandlung bekannt geworden, bei dem die Abwässer zunächst einer Neutralisation unterzogen werden und sodann in einem Verdampfer zu Schlamm eingedickt werden, bis ein Rückstand verbleibt, der als Schlamm entsorgt werden kann.

Der vorliegenden Erfindung liegt die Aufgabe zugrunde, ein Verfahren zur Behandlung von Abwässern aus einer Vorbehandlungsanlage mit einer nachgeschalteten Lackier- oder Pulverbeschichtungsanlage zu schaffen, bei dem eine Entsorgung von Abwasser vermieden oder zumindest reduziert wird und eine möglichst energiesparende Betriebsweise erreicht wird.

Diese Aufgabe wird durch ein Verfahren zur Behandlung von Abwässern aus einer Vorbehandlungsanlage mit einer nachgeschalteten Lackier- oder Pulverbeschichtungsanlage gelöst, die zunächst einer Abwasservorbehandlung unterzogen werden, und die durch einen technischen Verdunstungsprozeß behandelt werden, bis ein trockener oder stark eingedickter Rückstand verbleibt, wobei die zum Verdunsten oder Verdampfen notwendige Wärmeenergie zumindest teilweise aus Abwärme der Lackier- oder Pulverbeschichtungsanlage gewonnen wird.

Nachdem die Abwässer aus einer Vorbehandlungsanlage einer Abwasservorbehandlung unterzogen sind, erfolgt gemäß der Erfindung ein technischer Verdunstungsprozeß, bis ein trockener oder stark eingedickter Rückstand verbleibt.

Dadurch wird eine Einleitung von Abwasser in die Kanalisation praktisch vollständig vermieden; stattdessen muß nur noch der eingedickte Rückstand behandelt werden. Da die notwendige Energie für den Verdunstungsprozeß unmittelbar aus warmer Luft gewonnen wird, die aus der Lackier- oder Pulverbeschichtungsanlage freigesetzt wird, ist ein besonders energiesparender Betrieb gewährleistet.

Die erfindungsgemäße Behandlung des Abwassers erfolgt in einer Abwasseraufbereitungsanlage, in der eine technische Oberflächenverdunstung dadurch durchgeführt wird, daß zu behandelndes Abwasser über mit "Abfallenergie" geheizte Heizelemente geleitet wird oder Abfallenergie über die Oberfläche des Abwassers geleitet oder kontaktiert wird.

Dabei wird das Abwasser in der erfindungsgemäßen Abwasseraufbereitungsanlage so lange behandelt, bis ein eingedicktes, trockenes und/oder fast trockenes, Schüttgut und/oder Granulat zurückbleibt. Dadurch muß nun gar kein Abwasser mehr abgeleitet werden oder nur noch wenig Abwasser entsorgt werden.

Die Erfindung wird anhand eines in der Zeichnung schematisch dargestellten Ausführungsbeispiels in der folgenden Beschreibung näher erläutert, der euch weitere Einzelheiten des Gegenstandes der Erfindung entnommen werden können.

### Es zeigen:

Fig.: 1 ein Beispiel einer Vorbehandlungsanlage mit nachgeschalteter Abwasservorbehandlungsanlage wobei das vorbehandelte Abwasser in die Kanalisation eingeführt wird.

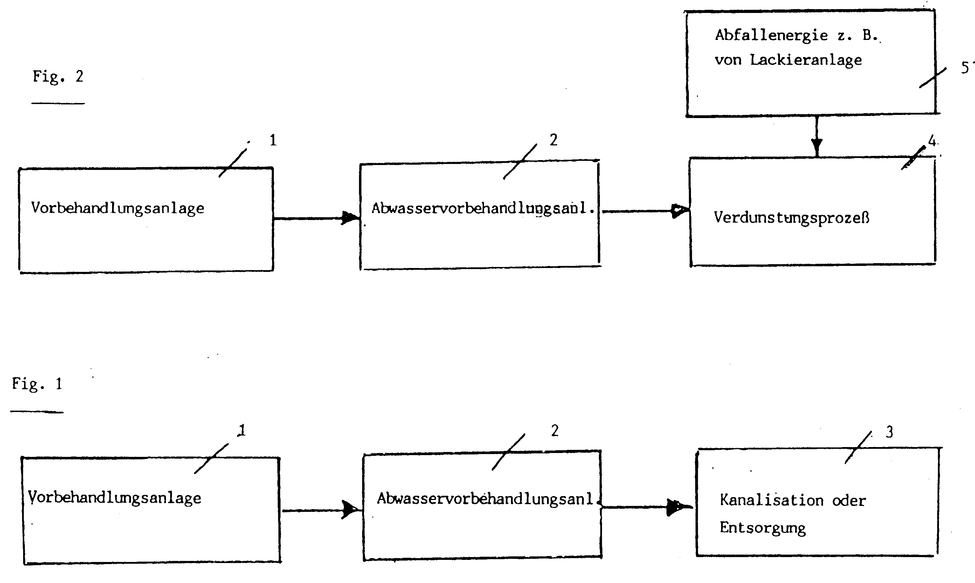

Fig. 2 Ein Beispiel einer Vorbehandlungsanlage mit nachgeschalteter Abwasservorbehandlungsanlage wobei das vorbehandelte Abwasser in eine Abwasseraufbereitungsanlage geleitet wird.

Die in Fig. 1 dargestellte Behandlungsanlage zeigt eine Vorbehandlungsanlage 1, in dem die Behandlungsgegenstände aus Eisen, aus Nichteisenmetallen, aus Kunststoff oder Verbundwerkstoffen durch Reinigen, Entfetten, Phosphatieren, Passivieren, Beizen, Chromatieren und Spülen zum anschließendem Lackieren und/oder zur Pulverbeschichtung vorbereitet werden.
Im Abschnitt 2 wird das bei den Behandlungsvorgängen verwendete Abwasser durch Entgiften, Neutralisieren, Ausflocken, Sedimentieren, Filtern, Ultrafiltern, durch Emulsionstrennung oder dergl. gereinigt. Dies so gereinigte Abwasser floß bisher in einen Abwasserkanal 3 und/oder wurde entsorgt.

In der in Fig. 2 dargestellten Behandlungsanlage ist die Erfindung dargestellt, die dadurch ausgezeichnet ist, daß den bekannten Abschnitten 1 und 2 eine Abwasseraufbereitungsanlage nachgeschaltet ist, die mit 4 bezeichnet ist. In diese Abwasseraufbereitungsanlage 4 wird sogenannte "Abfallenergie" 5 wie z.B. erwärmte Luft aus einem Prozeß eingeführt, die direkt oder indirekt aus einer Lackier- und Pulverbeschichtungsanlage stammt, die sonst üblicherweise nicht genutzt worden war. Dadurch kann in der Abwasseraufbereitungsanlage 4 ein Verdampfungs- und/oder Verdunstungsprozeß durch die Einleitung von Abwärme durchgeführt werden. In der Aufbereitungsanlage 4 kann auch ein technischer Verdunstungsprozeß durchgeführt werden. In der Abwasseraufbereitungsanlage 4 können auch Scheibenverdampfer oder Tauchscheibenkörper eingesetzt werden, die mit warmer Luft aus vorhergehenden Behandlungsprozessen beheizt werden. Auch ein technischer Oberflächenverdunstungsprozeß läßt sich im erfindungsgemäßen Abschnitt 4 durchführen.

Diese Behandlung des Abwassers mit "Abfallenergie" wird nun so lange durchgeführt, bis ein eingedicktes, trockenes und/oder fast trockenes, Gut, Schüttgut und/oder ein Granulat zurückbleibt, das entsorgt werden kann.

## Patentansprüche

1. Verfahren zur Behandlung von Abwässern aus einer Vorbehandlungsanlage mit einer nachgeschalteten Lackier- oder Pulverbeschichtungsanlage, die zunächst einer Abwasservorbehandlung unterzogen werden, und die anschließend durch einen technischen Verdunstungsprozeß behandelt werden, bis ein trockener oder stark eingedickter Rückstand verbleibt, wobei die zum Verdunsten notwendige Wärmeenergie zumindest teilweise aus Abwärme der Lackier- oder Pulverbeschichtungsanlage gewonnen wird.

## Claims

1. Method for treating waste water from a preliminary treatment plant with a subsequent varnishing or powder coating plant which is firstly subjected to a preliminary waste water treatment and is then treated by an industrial evaporation process until a dry or greatly thickened residue remains, with the thermal energy required for the evaporation being at least partly obtained from waste heat from the varnishing or powder coating plant.

## Revendications

1. Procédé pour le traitement des eaux usées provenant d'une installation de pré-traitement, en amont d'une installation de peinture ou de poudrage, les eaux usées subissant d'abord un traitement préalable et étant ensuite soumises à un processus industriel d'évaporation, jusqu'à obtention d'un résidu sec ou très épais, l'énergie thermique nécessaire à l'évaporation provenant au moins partiellement de la chaleur perdue dégagée par l'installation de peinture ou de poudrage.
